(19) Europäisches Patentamt
European Patent Office
Office européen des brevets

(11)  EP 2 722 599 B1

(12)  **EUROPEAN PATENT SPECIFICATION**

(45) Date of publication and mention
of the grant of the patent:
**19.08.2015  Bulletin 2015/34**

(51) Int Cl.:
*F24D 19/00* (2006.01)   *C02F 5/02* (2006.01)

(21) Application number: **13188786.1**

(22) Date of filing: **15.10.2013**

(54) **Water heater**

Warmwasserbereiter

Chauffe-eau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2012  JP 2012228615**

(43) Date of publication of application:
**23.04.2014  Bulletin 2014/17**

(73) Proprietor: **Panasonic Corporation
Kadoma-shi
Osaka 571-8501 (JP)**

(72) Inventors:
• **Yamada, Muneto**
**OSAKA, 540-6207 (JP)**
• **Sano, Mitsuhiro**
**OSAKA, 540-6207 (JP)**
• **Ohama, Masahiro**
**OSAKA, 540-6207 (JP)**
• **Nishiyama, Yoshitsugu**
**OSAKA, 540-6207 (JP)**
• **Yanagisawa, Tadashi**
**OSAKA, 540-6207 (JP)**

(74) Representative: **Eisenführ Speiser
Patentanwälte Rechtsanwälte PartGmbB
Postfach 31 02 60
80102 München (DE)**

(56) References cited:
**WO-A1-2012/144277     JP-A- 2011 069 572**

**Description**

[TECHNICAL FIELD]

The present invention relates to a water heater including scale suppressing means.

[BACKGROUND TECHNIQUE]

As a water heater of this kind, there is a conventional water heater which supplies hot water using high temperature hot water stored in a hot water tank (see patent document 1 for example).

Fig. 12 shows the conventional water heater described in patent document 1. As shown in Fig. 12, this water heater includes a heat pump unit 2 including a gas cooler (hot water-supply heat exchanger) 1, and a hot water storing unit 4 including a hot water tank 3 in which hot water boiled by the gas cooler 1 is stored.

In the heat pump unit 2, a compressor 5, the gas cooler 1, an expansion valve (decompressor) 6 and an evaporator 7 are connected to one another to configure a refrigerant circulation passage. In the hot water storing unit 4, a circulation pump 8 the gas cooler 1 and the hot water tank 3 are connected to one another to configure a water circuit.

A high temperature and high pressure gas refrigerant compressed by the compressor 5 heat-exchanges with water stored in the hot water tank 3 in the gas cooler 1, thereby heating water. A water circulation passage extending from the hot water tank 3 to the gas cooler 1 includes an adding device (scale suppressing means) 9 which supplies suppressing agent. The suppressing agent suppresses generation of scale. The adding device 9 adds additive agent to low temperature water before the water flows into the gas cooler 1. By adding the additive agent to water, generation of scale in the water circuit of the hot water storing unit 4 is suppressed, and this prevents the water circuit from being clogged.

Patent document 1 includes a bypass circuit (not shown) which bypasses the adding device 9. A three-way valve (not shown) is provided at a branch point of the bypass circuit. By switching the three-way valve, water selectively flows to the adding device 9 or the bypass circuit.

[PRIOR ART DOCUMENT]

[PATENT DOCUMENT]

[Patent Document 1] Japanese Patent Application Laid-open No.2011-69572

[SUMMARY OF THE INVENTION]

[PROBLEM TO BE SOLVED BY THE INVENTION]

According to the conventional configuration, however, since the additive amount of scale suppressing agent can not be adjusted in accordance with variation in operating conditions of the water heater, there is a problem that it is not possible to effectively prevent scale from generating. Further, the scale suppressing agent is consumed more than necessary, and there is a problem that this consumption increases costs required for exchanging the scale suppressing agent and for maintenance.

The present invention has been accomplished to solve these problems, and it is an object of the invention to provide a water heater capable of suppressing scale from being deposited without wasting scale suppressing agent by appropriately adjusting an additive amount of the scale suppressing agent in accordance with variation in operating conditions of the water heater.

[MEANS FOR SOLVING THE PROBLEM]

To solve the problems of the conventional technique, the present invention provides a water heater comprising: a hot water tank in which hot water is stored; a water supply pipe for supplying water to a lower portion of the hot water tank; heating means for heating water sent from the lower portion of the hot water tank through an entering-water pipe passage; a circulation pump which is disposed in the entering-water pipe passage and which sends the water of the lower portion of the hot water tank to the heating means; an outgoing-hot water pipe passage for guiding water heated by the heating means to an upper portion of the hot water tank; and scale suppressing means disposed in the entering-water pipe passage and adding, to water sent to the heating means, scale suppressing agent which suppresses generation of scale; wherein when a temperature of water which flows into the heating means is lower, a configuration of the scale suppressing agent included in the water which flows into the heating means is made greater.

Further, the invention also provides a water heater comprising: a hot water tank in which hot water is stored; a water supply pipe for supplying water to a lower portion of the hot water tank; heating means for heating water sent from the lower portion of the hot water tank through an entering-water pipe passage; a circulation pump which is disposed in the entering-water pipe passage and which sends the water of the lower portion of the hot water tank to the heating means; an outgoing-hot water pipe passage for guiding water heated by the heating means to an upper portion of the hot water tank; and scale suppressing means disposed in the entering-water pipe passage and adding, to water sent to the heating means, scale suppressing agent which suppresses generation of scale; wherein when an outside air temperature is lower, a concentration of the scale suppressing agent included in water which flows into the heating means is made greater.

According to this configuration, it is possible to adjust a concentration of the scale suppressing agent with respect to water which flows to the heating means in accordance with operating conditions under which scale is prone to generate. Therefore, it is possible to provide a reliable water heater capable of preventing the scale suppressing agent from being wasted, capable of reducing maintenance costs required for maintenance such as exchange and replenishment of the scale suppressing agent, and capable of effectively suppressing scale from being deposited.

[EFFECT OF THE INVENTION]

According to the present invention, it is possible to provide a water heater capable of suppressing scale from generating while adjusting a concentration of the scale suppressing agent in accordance with operating conditions of the hot water and while preventing the scale suppressing agent from being wasted.

[BRIEF DESCRIPTION OF THE DRAWINGS]

Fig. 1 is a block diagram of a water heater in a first embodiment of the present invention;
Fig. 2 is an explanatory diagram for explaining a relation between a water temperature and solubility of a scale component;
Fig. 3 is an explanatory diagram for explaining a relation between a heating temperature of water and a heating flow rate in the first embodiment of the invention;
Fig. 4 is an explanatory diagram for explaining a relation between an outside air temperature, a hot water supply load, a heating temperature and a heating flow rate in the water heater;
Fig. 5 is an explanatory diagram for explaining a relation between an entering-water temperature, a concentration of scale suppressing agent and a heating flow rate in the water heater;
Fig. 6 is a characteristic diagram showing a relation between an entering-water temperature and a concentration of the scale suppressing agent in the water heater;
Fig. 7 is a block diagram of a water heater in a second embodiment of the invention;
Fig. 8(a) is an explanatory diagram for explaining a relation between a flow rate and a concentration of scale suppressing agent when the outside air temperature is low in the hot water, and Fig. 8(b) is an explanatory diagram for explaining a relation between a flow rate and a concentration of the scale suppressing agent when the outside air temperature is high;
Fig. 9(a) is a block diagram showing one example of flow rate-adjusting means which sets a split flow ratio of the water heater, and Fig. 9(b) is a block diagram showing another example of the flow rate-adjusting means which sets a split flow ratio of the water heater;
Fig. 10 is a block diagram of a water heater in a fourth embodiment of the invention;
Fig. 11 is a block diagram of a water heater in a fifth embodiment of the invention; and

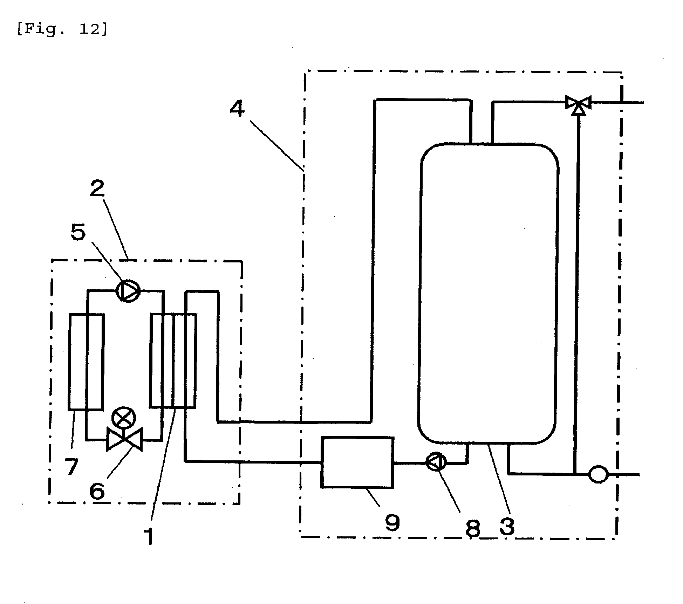

Fig. 12 is a block diagram of a conventional hot water.

50    water heater
52    hot water-supply heat exchanger
55    heating means
57    hot water tank
58    water supply pipe
63    circulation pump
64    entering-water pipe passage
65    outgoing-hot water pipe passage

66    heating temperature detecting means
67    scale suppressing agent
68    scale suppressing means
71    entering-water temperature detecting means

[MODE FOR CARRYING OUT THE INVENTION]

A first aspect of the invention provides a water heater comprising: a hot water tank in which hot water is stored; a water supply pipe for supplying water to a lower portion of the hot water tank; heating means for heating water sent from the lower portion of the hot water tank through an entering-water pipe passage; a circulation pump which is disposed in the entering-water pipe passage and which sends the water of the lower portion of the hot water tank to the heating means; an outgoing-hot water pipe passage for guiding water heated by the heating means to an upper portion of the hot water tank; and scale suppressing means disposed in the entering-water pipe passage and adding, to water sent to the heating means, scale suppressing agent which suppresses generation of scale; wherein when a temperature of water which flows into the heating means is lower, a configuration of the scale suppressing agent included in the water which flows into the heating means is made greater.

According to this aspect, water supplied from the water supply pipe to the lower portion of the hot water tank flows from the lower portion of the hot water tank into the heating means through the entering-water pipe. Hence, a temperature of water flowing through the entering-water pipe passage is changed by a temperature of water supplied from the water supply pipe. Generally, as an outside air temperature is lower, a temperature of supplied water becomes lower, and as the outside air temperature is lower, a using amount of high temperature hot water becomes greater and the hot water supply load becomes greater. Hence, a temperature of hot water stored in the hot water tank, i.e., a temperature (heating temperature) of water heated by the heating means is increased.

Further, the higher a temperature of water is, the easier a scale component is deposited as will be described later.

Therefore, when a temperature of water flowing through the entering-water pipe passage is low, since it is possible to estimate that the outside air temperature is low, it is necessary to rise the heating temperature. Hence, by increasing a concentration of the scale suppressing agent included in water flowing into the heating means, it is possible to efficiently suppress the generation of scale.

Therefore, it is possible to provide a reliable water heater capable of appropriately adjusting a concentration of the scale suppressing agent depending upon operating conditions, capable of preventing scale suppressing agent from being wasted, and capable of preventing the water circuit from being clogged.

A second aspect of the invention provides a water heater comprising: a hot water tank in which hot water is stored; a water supply pipe for supplying water to a lower portion of the hot water tank; heating means for heating water sent from the lower portion of the hot water tank through an entering-water pipe passage; a circulation pump which is disposed in the entering-water pipe passage and which sends the water of the lower portion of the hot water tank to the heating means; an outgoing-hot water pipe passage for guiding water heated by the heating means to an upper portion of the hot water tank; and scale suppressing means disposed in the entering-water pipe passage and adding, to water sent to the heating means, scale suppressing agent which suppresses generation of scale; wherein when an outside air temperature is lower, a concentration of the scale suppressing agent included in water which flows into the heating means is made greater.

According to this aspect, water supplied from the water supply pipe to the lower portion of the hot water tank flows from the lower portion of the hot water tank into the heating means through the entering-water pipe. Hence, a temperature of water flowing through the entering-water pipe passage is changed by a temperature of water supplied from the water supply pipe. Generally, as an outside air temperature is lower, a temperature of supplied water becomes lower, and as the outside air temperature is lower, a using amount of high temperature hot water becomes greater and the hot water supply load becomes greater. Hence, a temperature of hot water stored in the hot water tank, i.e., a temperature (heating temperature) of water heated by the heating means is increased.

Further, the higher a temperature of water is, the easier a scale component is deposited as will be described later.

Therefore, when a temperature of water flowing through the entering-water pipe passage is low, since the outside air temperature is low, it is necessary to rise the heating temperature. Hence, by increasing a concentration of the scale suppressing agent included in water flowing into the heating means, it is possible to efficiently suppress the generation of scale.

Therefore, it is possible to provide a reliable water heater capable of appropriately adjusting a concentration of the scale suppressing agent depending upon operating conditions, capable of preventing scale suppressing agent from being wasted, and capable of preventing the water circuit from being clogged.

According to a third aspect of the invention, especially in the first or second aspect, when a temperature of the water which flows into the heating means is lower, a flow rate of the water which flows into the heating means is made smaller.

4

According to this aspect, by increasing the flow rate, residence time of water in the scale suppressing means is shortened and thus, the concentration of the scale suppressing agent can be reduced. On the other hand, by reducing the flow rate, the concentration of the scale suppressing agent can be increased.

Further, by reducing the flow rate, since the residence time of water in the heating means is increased, the heating temperature can be made higher. On the other hand, by increasing the flow rate, the heating temperature can be made lower.

That is, if the flow rate is reduced, the concentration of the scale suppressing agent can be increased and the heating temperature can be made high. If the flow rate is increased, the concentration of the scale suppressing agent can be lowered and the heating temperature can be lowered. Therefore, by adjusting the flow rate in accordance with a temperature of water flowing through the entering-water pipe passage, it is possible to adjust, at the same time, the heating temperature and the concentration of the scale suppressing agent.

According to a fourth aspect of the invention, especially in the first or second aspect, the entering-water pipe passage is provided with a bypass circuit which bypasses a portion of the entering-water pipe passage, the scale suppressing means includes flow rate-adjusting means which is disposed in the bypass circuit and which adjusts a ratio between a flow rate of water flowing through the entering-water pipe passage and a flow rate of water flowing through the bypass circuit, and entering-water temperature detecting means which measures a temperature of the water which flows into the heating means, and the ratio of the flow rates is adjusted based on a detected value of the entering-water temperature detecting means.

According to this aspect, the scale suppressing means is disposed in the bypass circuit which is provided in parallel to the entering-water pipe passage. Hence, it is possible to branch a portion of water flowing through the entering-water pipe passage, and to make the scale suppressing agent dissolve in the water, and other water can be made to flow into the heating means as it is. Hence, it is possible to more appropriately adjust the concentration of the scale suppressing agent with respect to water flowing into the heating means in accordance with operating conditions.

According to a fifth aspect of the invention, especially in any one of the first to fourth aspects, the scale suppressing agent has polyphosphate as a main component.

According to this aspect, polyphosphate which dissolved in water is applied to calcium carbonate which is a main component of scale and crystal of calcium carbonate is improved. That is, the calcium carbonate can be formed into small spherical crystals instead of normal large rhombohedral bodies. The spherical crystals have a weak cohesive force unlike the rhombohedral crystals, it is difficult to laminate the spherical crystals, they become massed together in a point-to-point manner, and it is possible to hinder the growth of crystals. Hence, it is possible to restrain calcium carbonate from becoming scale.

Embodiments of the present invention will be described with reference to the drawings. The invention is not limited by the embodiments.

(First Embodiment)

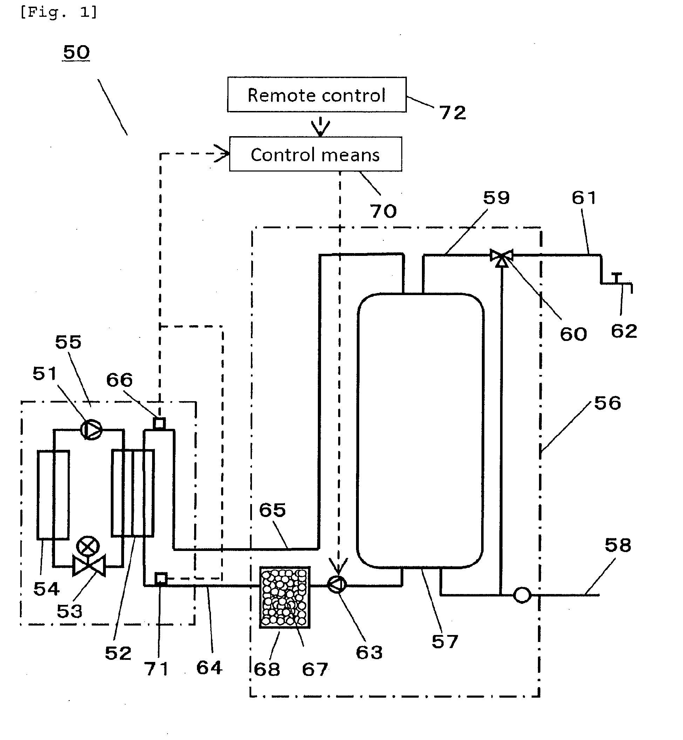

Fig. 1 is a block diagram of a water heater in a first embodiment of the present invention.

As shown in Fig. 1, the water heater 50 includes heating means 55 and a hot water storing unit 56. The heating means 55 which is a heat source is a heat pump unit composed of a heat pump cycle. The heat pump cycle includes a compressor 51, a hot water-supply heat exchanger 52, a decompressor 53, and an evaporator 54 which absorbs atmospheric heat. As a refrigerant, the heat pump cycle uses carbon dioxide whose high pressure side refrigerant pressure becomes equal to or higher than a critical pressure.

A hot water tank 57 is accommodated in the hot water storing unit 56. Water is supplied to the hot water tank 57 from a water supply pipe 58 connected to a lower portion of the hot water tank 57. High temperature hot water is stored in an upper portion of the hot water tank 57. The high temperature hot water passes through a hot water-supply pipe passage 59, and the hot water is mixed with low temperature water by a hot water-mixing valve 60 and becomes hot water of a desired temperature. Thereafter, the hot water passes through the hot water-supply pipe 61 and is supplied from a hot water terminal (faucet 62). A temperature of water which flows through the entering-water pipe passage 64 and flows into the heating means 55 is detected by entering-water temperature detecting means 71.

A entering-water pipe passage 64 is connected to a lower portion of the hot water tank 57. The entering-water pipe passage 64 is provided with a circulation pump 63. The entering-water pipe passage 64 is connected to the hot water-supply heat exchanger 52. An outgoing-hot water pipe passage 65 is connected to the hot water-supply heat exchanger 52. The outgoing-hot water pipe passage 65 is connected to the upper portion of the hot water tank 57. The circulation pump 63, the entering-water pipe passage 64, the hot water-supply heat exchanger 52 and the outgoing-hot water pipe passage 65 configure a boiling circuit. Low temperature water sent out from the lower portion of the hot water tank 57 by the circulation pump 63 is heated by a high temperature refrigerant in the hot water-supply heat exchanger 52, and this water is stored in the upper portion of the hot water tank 57.

The outgoing-hot water pipe passage 65 is connected to a water-side outlet of the hot water-supply heat exchanger 52. The outgoing-hot water pipe passage 65 is provided with heating temperature detecting means 66 which detects a temperature of hot water heated by the heating means 55. An operation of the circulation pump 63 is adjusted by control means 70 which receives signals of at least the entering-water temperature detecting means 71 and the heating temperature detecting means 66.

The entering-water pipe passage 64 is provided with scale suppressing means 68 into which scale suppressing agent 67 is charged.

An operation and an effect of the water heater 50 configured as described above will be described below.

A hot water supply and heating operation for boiling water in the hot water tank 57 will be described in Fig. 1. If it is requested to boil the hot water tank 57, the hot water supply and heating operation utilizing atmospheric heat is carried out by the heating means 55.

In this case, a high temperature and high pressure refrigerant higher than a critical pressure discharged from the compressor 51 flows into the hot water-supply heat exchanger 52, and dissipates heat to low temperature water sent from the lower portion of the hot water tank 57. Thereafter, the refrigerant is decompressed by the decompressor 53, absorbs heat from atmosphere in the evaporator 54 and is gasified and returns to the compressor 51.

Low temperature water flows into the lower portion of the hot water tank 57 through the water supply pipe 58 and is sent out from the lower portion of the hot water tank 57 into the hot water-supply heat exchanger 52 through the entering-water pipe passage 64. A flow rate of this low temperature water is adjusted by the circulation pump 63 such that the outlet temperature (heating temperature) of the hot water-supply heat exchanger 52 becomes equal to a predetermined temperature. This low temperature water is heated by a high temperature refrigerant in the hot water-supply heat exchanger 52, and the water becomes hot water of a predetermined temperature and the water flows in from the upper portion of the hot water tank 57 and is stored therein.

Since the entering-water pipe passage 64 is provided with the scale suppressing means 68 into which the scale suppressing agent 67 is charged, water sent from the lower portion of the hot water tank 57 by the circulation pump 63 flows into the scale suppressing means 68 and dissolves the scale suppressing agent 67. Water in which the scale suppressing agent 67 is dissolved flows into the hot water-supply heat exchanger 52, and is heated until its temperature becomes equal to a desired temperature as described above.

Here, the scale suppressing agent 67 is particles having polyphosphate as a main component and is charged into the scale suppressing means 68. The scale suppressing agent 67 dissolved in water suppresses growth of crystal of calcium carbonate generated in the hot water-supply heat exchanger 52, and prevents scale from generating.

Typical examples of polyphosphate are sodium tripolyphosphate and sodium hexametaphosphate, but other polyphosphate may also be used.

In this embodiment, the scale suppressing agent 67 is particles having polyphosphate as a main component, but the scale suppressing agent 67 may have low molecular polymer as a main component such as phosphonic acid-based or carboxylic acid-based high molecular electrolyte, and it is only necessary that the scale suppressing agent 67 has a scale suppressing function.

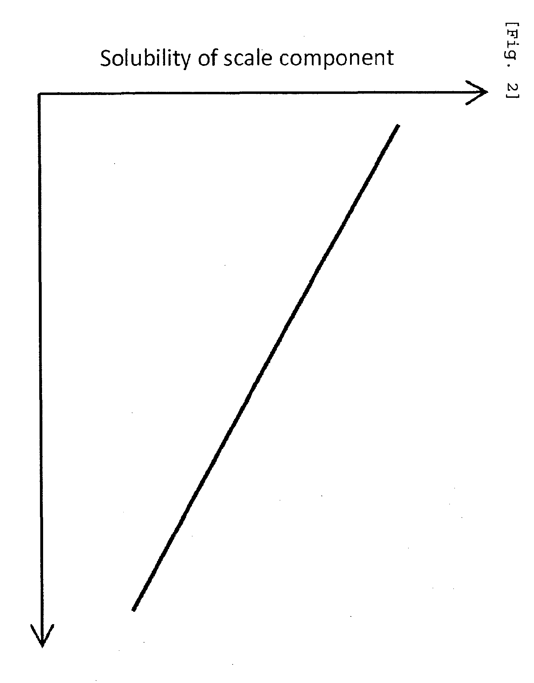

Next, a relation between deposition of scale and a temperature of water will be described. In Fig. 2, a horizontal axis shows a temperature of water, a vertical axis shows solubility of a scale component into water, and Fig. 2 shows solubility of the scale component with respect to water. As shown in Fig. 2, the higher a temperature of water becomes, the smaller the solubility of the scale component (e.g., calcium carbonate) becomes, and the scale component crystallizes and is deposited in water.

Here, in the case of a hot water-storing type water heater 50, hot water of an amount corresponding to a hot water supply load of one day is stored in the hot water tank 57 utilizing midnight power service which is inexpensive in electricity cost. The hot water supply load is large in winter season when an outside air temperature is low and using frequency and a using amount of hot water are greater, and is small in summer season when the outside air temperature is high.

A degree of the outside air temperature influences a temperature of water supplied from the water supply pipe 58 to the lower portion of the hot water tank 57. The temperature of water to be supplied (supplied water temperature, hereinafter) influences a temperature (entering-water temperature) of water which flows from the lower portion of the hot water tank 57 into the heating means 55 through the entering-water pipe passage 64. That is, a degree of the outside air temperature which changes seasonally can be estimated from a temperature (entering-water temperature) of water flowing through the entering-water pipe passage 64.

Generally, the lower the outside air temperature is, the lower the supplied water temperature and the entering-water temperature become, and the high the outside air temperature is, the higher the supplied water temperature and the entering-water temperature become. The outside air temperature changes abtuptly throughout the day, but variation in the supplied water temperature throughout the day is small. That is, by detecting the supplied water temperature, it is possible to appropriately grasp seasonal temperature variation.

Hence, a temperature of water which flows into the heating means 55 is detected by the entering-water temperature detecting means 71, the outside air temperature is estimated from a detected value of the means 71, and a boiling operation of the water heater 50 is carried out. According to this, based on a gentle variation value, it is possible to realize stable operation control in accordance with a hot water supply load which changes seasonally.

With respect to the hot water supply load which changes depending upon reason, the heating temperature of hot water to be stored in the hot water tank 57 is changed (e.g., from 65°C to 90°C). That is, in winter season when the hot water supply load is large, hot water is stored at a hot water storing temperature of about 85°C to 90°C for example, and in summer season when the hot water supply load is small, hot water is stored at a hot water storing temperature of about 65°C to 70°C. In intermediate seasons such as spring and fall, an intermediate hot water storing temperature which is lower than winter and higher than summer is employed.

That is, under an operating condition in which the outside air temperature is low as in winter, a heating temperature (hot water storing temperature) is increased and the boiling operation is carried out. Therefore, the higher a temperature of water is, the easier the scale generates. Such scale generates more under the operating condition in which the heating temperature is high, i.e., under an operating condition in which the outside air temperature is low.

Hence, if an operating condition under which scale is prone to be deposited is estimated by an entering-water temperature, and if a concentration of the scale suppressing agent 67 which dissolves in water flowing into the heating means 55 is increased, it is possible to effectively suppress the deposition of scale. It is also possible to employ a configuration that a heat pump unit or a hot water storing unit 56 disposed outside a room is provided with outside air temperature detecting means (not shown), and a heating temperature (hot water storing temperature) is changed based on a detected value of the outside air temperature detecting means.

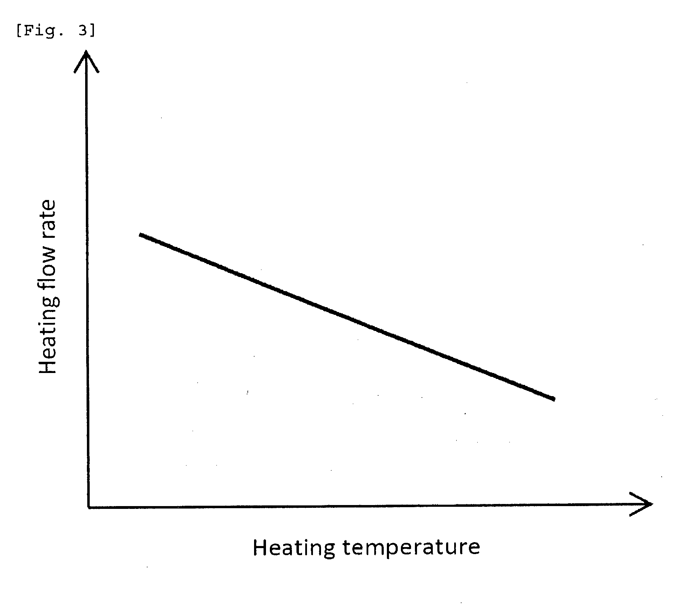

Here, in the case of the hot water-storing type water heater, generally, even if an outside air temperature and a supplied water temperature are changed, heating ability is substantially constant. In Fig. 3, a horizontal axis shows a heating temperature (hot water storing temperature), a vertical axis shows a heating flow rate, and Fig. 3 shows a relation between the heating temperature and the heating flow rate when the heating ability is constant.

If the heating ability of the heating means 55 is constant, it is possible to adjust a heating temperature by adjusting a flow rate (heating flow rate) of water flowing into the heating means 55 as shown in Fig. 3. For example, if the heating flow rate is reduced, a residence time of water in the heating means 55 is increased as compared with acase where the heating flow rate is large. Therefore, a heat quantity obtained by water per unit flow rate from a high temperature refrigerant is increased. Hence, it is possible to increase the heating temperature. Therefore, as shown in Fig. 3, the number of rotations of the circulation pump 63 is controlled such that if a target value of a heating temperature is higher when hot water is produced, a flow rate of water which sent to the heating means 55 under pressure becomes smaller. That is, the number of rotations of the circulation pump 63 is reduced. By changing the number of rotations of the circulation pump 63, various heating temperatures can be realized.

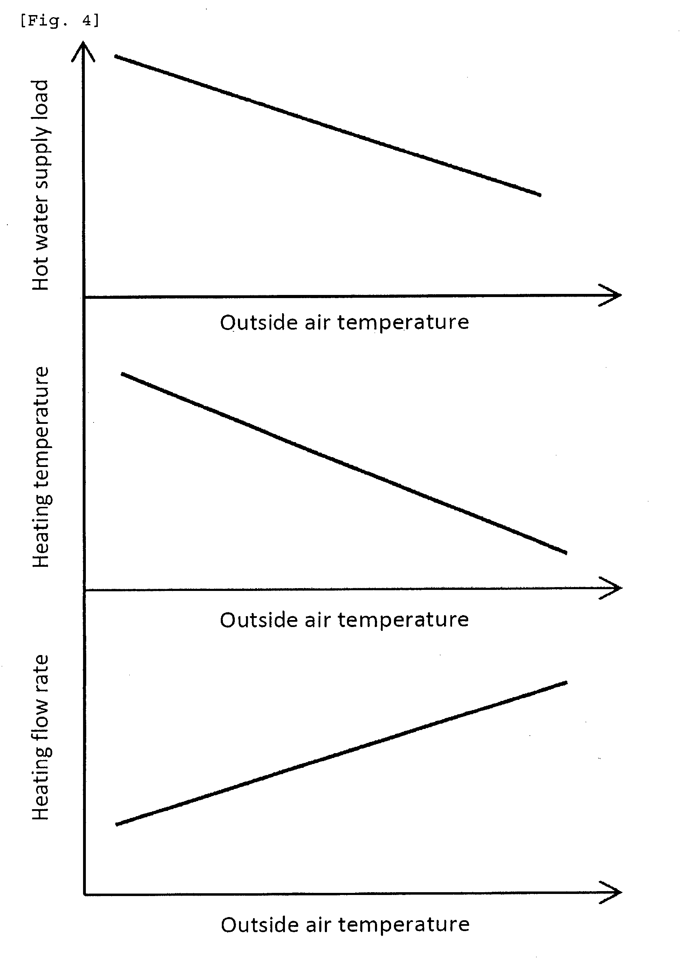

The above described contents will be described using Fig. 4. In Fig. 4, a horizontal axis shows an outside air temperature, a vertical axis shows a hot water supply load, a heating temperature (hot water storing temperature) and a heating flow rate, and Fig. 4 shows variation in a hot water supply load, a heating temperature (hot water storing temperature) and a heating flow rate with respect to variation in the outside air temperature.

As shown in Fig. 4, when the outside air temperature is low, the hot water supply load is increased as compaird with a case where the outside air temperature is high. Hence, it is necessary to increase the hot water storing temperature (heating temperature). At this time, to increase a heat quantity given to water per unit flow rate by the heating means 55, the number of rotations of the circulation pump 63 is controlled such that the heating flow rate is reduced.

If the heating flow rate is reduced, i.e., if a flow rate of water which flows into the heating means 55 is reduced, time during which water flowing through the entering-water pipe passage 64 stays in the scale suppressing means 68 becomes long as compared with a case where the heating flow rate is large. That is, time during which water and the scale suppressing agent 67 are in contact with each other becomes long. Hence, since an amount of scale suppressing agent 67 dissolving in water can be increased, it is possible to increase an amount of scale suppressing agent 67 included in water per unit flow rate which flows into the heating means 55, i.e., it is possible to increase a concentration of the scale suppressing agent 67.

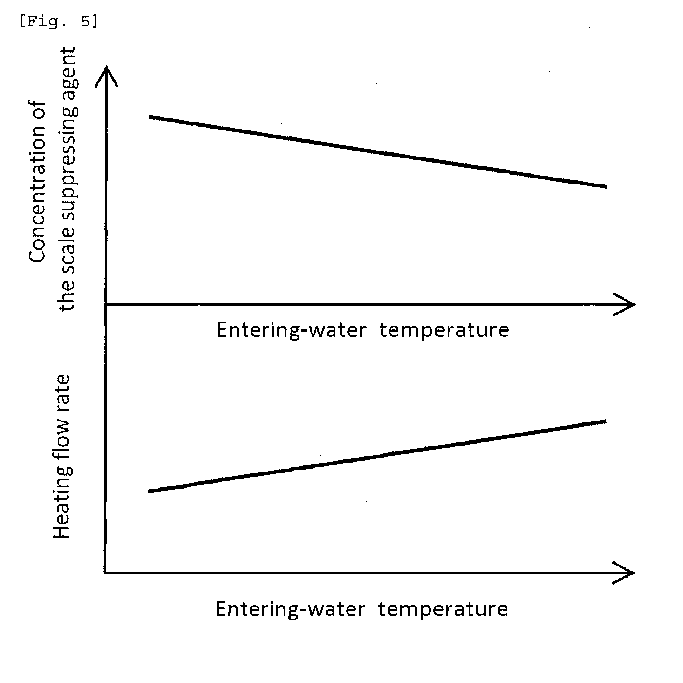

In this embodiment, variation in an outside air temperature is estimated by a detected value of the entering-water temperature detecting means 71, and a heating flow rate and a concentration of the scale suppressing agent are adjusted as shown in Fig. 5. More specifically, as the entering-water temperature is lower, the heating flow rate is made smaller, a heat quantity received by water per unit flow rate in the heating means 55 is increased, and the heating temperature is made to rise. More scale suppressing agent 67 is made to dissolve in water by the scale suppressing means 68, and a concentration of the scale suppressing agent 67 is increased.

In a situation where scale is prone to be deposited, i.e., under an operating condition where an outside air temperature is low, an outside air temperature is estimated from a detected value of an entering-water temperature, and the number of rotations of the circulation pump 63 is controlled such that a flow rate of water which flows into the heating means 55 becomes small. According to this, a heating temperature can be made to rise in accordance with a hot water supply load, it is possible to increase an amount of scale suppressing agent 67 included in water per unit flow rate in the scale suppressing means 68, i.e., it is possible to increase a concentration of the scale suppressing agent 67 by the scale suppressing means 68, and it is possible to efficiently suppress the deposition of scale.

Hence, since it is possible to adjust the concentration of the scale suppressing agent 67 which dissolves in water in accordance with an operating condition of the water heater, it is possible to provide a reliable water heater without wasting scale suppressing agent 67.

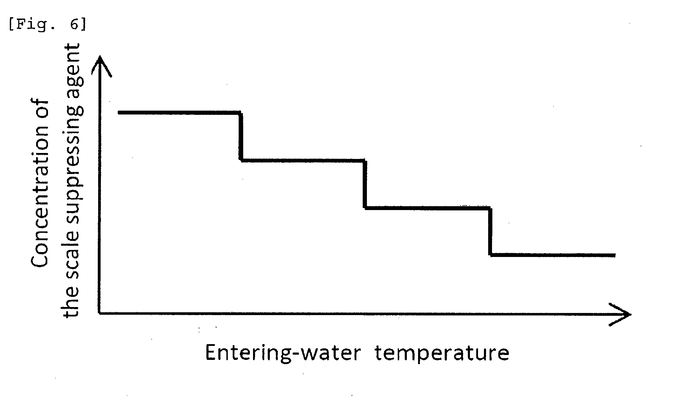

As shown in Fig. 6, only within a certain range of an entering-water temperature, it is possible to adjust a concentration of the scale suppressing agent 67 with respect to water which flows into the heating means 55. That is, it is only necessary that when the entering-water temperature is lower, the concentration of the scale suppressing agent 67 is increased.

In this embodiment, the entering-water temperature of water which flows into the heating means 55 is detected by the entering-water temperature detecting means 71 provided in the entering-water pipe passage 64, the outside air temperature is estimated, and the concentration of the scale suppressing agent 67 is adjusted based on the entering-water temperature. However, since there is a correlation beween, the entering-water temperature, the supplied water temperature and the outside air temperature, the water supply pipe 58 may be provided with supplied water temperature detecting means (not shown), the supplied water temperature may directly be measured, and the concentration of the scale suppressing agent 67 may be adjusted based on the measured temperature.

The concentration of the scale suppressing agent 67 which dissolves in water flowing into the heating means 55 may be determined by detecting hardness of supplied water and may be determined based on a detected value of supplied water hardness detecting means (not shown) provided in the water supply pipe 58. That is, if the supplied water hardness is high, to adjust the configuration to such a level that generation of scale can be suppressed, the control means 70 may adjust the number of rotations of the circulation pump 63.

The supplied water hardness may previously be input by a user. In this case, the supplied water hardness may be input to the remote control 72 of the water heater 50 provided with the control means 70.

A relation between the supplied water hardness, the entering-water temperature, the heating temperature and a concentration of the scale suppressing agent 67 capable of suppressing generation of scale may be memorized in the remote control 72.

(Second Embodiment)

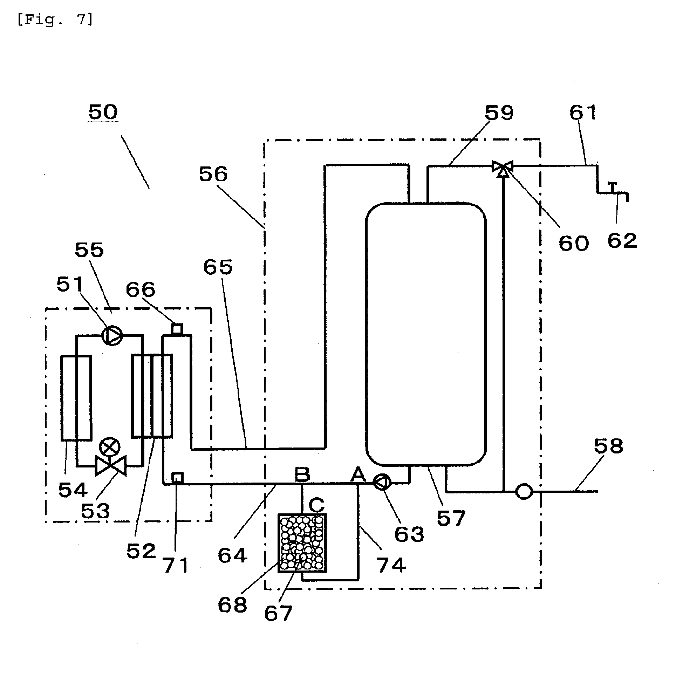

Fig. 7 is a block diagram of a water heater in a second embodiment of the invention. In the second embodiment, the same symbols are allocated to the same elements as those in the embodiment 1, and detailed description thereof will be omitted.

In Fig. 7, the heating means 55 which is a heat source is a heat pump unit composed of a heat pump cycle including the compressor 51, the hot water-supply heat exchanger 52, the decompressor 53 and the evaporator 54 which absorbs atmospheric heat. As a refrigerant, the heat pump cycle uses carbon dioxide whose high pressure side refrigerant pressure becomes equal to or higher than a critical pressure.

Water is supplied to the hot water tank 57 from the water supply pipe 58 connected to a lower portion of the hot water tank 57. High temperature hot water is stored in an upper portion of the hot water tank 57. The high temperature hot water passes through the hot water-supply pipe passage 59, and the hot water is mixed with low temperature water by the hot water-mixing valve 60 and becomes hot water of a desired temperature. Thereafter, the hot water passes through the hot water-supply pipe 61 and is supplied from a hot water terminal such as the faucet 62.

The entering-water pipe passage 64 is connected to a lower portion of the hot water tank 57. The entering-water pipe passage 64 is provided with the circulation pump 63. The entering-water pipe passage 64 is connected to the hot water-supply heat exchanger 52. The outgoing-hot water pipe passage 65 is connected to the hot water-supply heat exchanger 52. The outgoing-hot water pipe passage 65 is connected to the upper portion of the hot water tank 57. The circulation pump 63, the entering-water pipe passage 64, the hot water-supply heat exchanger 52 and the outgoing-hot water pipe passage 65 configure a boiling circuit. Low temperature water sent out from the lower portion of the hot water tank 57 by the circulation pump 63 disposed in the entering-water pipe passage 64 is heated by a high temperature refrigerant in the hot water-supply heat exchanger 52, and this water is stored in the upper portion of the hot water tank 57 through the outgoing-hot water pipe passage 65. A temperature of water which flows into the heating means 55 from the entering-water pipe passage 64 is detected by the entering-water temperature detecting means 71.

The outgoing-hot water pipe passage 65 is connected to a water-side outlet of the hot water-supply heat exchanger 52. The outgoing-hot water pipe passage 65 is provided with heating temperature detecting means 66 which detects a temperature of hot water heated by the heating means, i.e., a heating temperature. Further, in the entering-water pipe passage 64, a bypass circuit 74 as another entering-water pipe passage which bypasses a portion of the entering-water pipe passage 64 is provided in parallel. The bypass circuit 74 is provided with scale suppressing means 68 into which scale suppressing agent 67 is charged. According to this, the entering-water pipe passage 64 which is not provided with the scale suppressing means 68 forms a main circuit. The bypass circuit 74 in which the scale suppressing means 68 is disposed forms a sub-circuit of the entering-water pipe passage 64.

An operation and an effect of the water heater 50 configured as described above will be described below.

In Fig. 7, a hot water supply and heating operation for boiling the hot water tank 57 will be described. If it is requested to boil the hot water tank 57, the hot water supply and heating operation utilizing the atmospheric heat is carried out by the heating means 55. In this case, a high temperature and high pressure refrigerant which is higher than a critical pressure and which is discharged from the compressor 51 flows into the hot water-supply heat exchanger 52 and dissipates heat to low temperature water sent from the lower portion of the hot water tank 57. Thereafter, the refrigerant is decompressed by the decompressor 53, absorbs heat from atmosphere in the evaporator 54, and the refrigerant is gasified and returns into the compressor 51.

A flow rate of water which flows into the hot water-supply heat exchanger 52 is adjusted by controlling the number of rotations of the circulation pump 63 such that an outlet temperature (heating temperature, i.e., temperature detected by the heating temperature detecting means 66) of the hot water-supply heat exchanger 52 becomes equal to a predetermined temperature. According to this, water which is sent from the lower portion of the hot water tank 57 through the entering-water pipe passage 64 is heated in the hot water-supply heat exchanger 52 and becomes hot water of a predetermined temperature, and flows from the upper portion of the hot water tank 57 and is stored.

The bypass circuit 74 provided with the scale suppressing means 68 into which the scale suppressing agent 67 is charged is connected to the entering-water pipe passage 64 in parallel. Hence a portion of water sent from the lower portion of the hot water tank 57 by the circulation pump 63 flows into the bypass circuit 74 from a connection A, and remaining water flows into the entering-water pipe passage 64.

The water which flowed into the bypass circuit 74 flows into the scale suppressing means 68, the scale suppressing agent 67 dissolves in this water and thereafter, the water is mixed with water which flowed into the entering-water pipe passage 64 at a connection B. The water mixed with the water which flowed through the entering-water pipe passage 64 at the connection B and in which the scale suppressing agent 67 dissolved flows into the hot water-supply heat exchanger 52, and is heated until a temperature of the water becomes equla to a predetermined temperature. At this time, the scale suppressing agent 67 included in the water especially suppresses growth of crystals such as calcium carbonate generated in the hot water-supply heat exchanger 52 and prevents generation of scale.

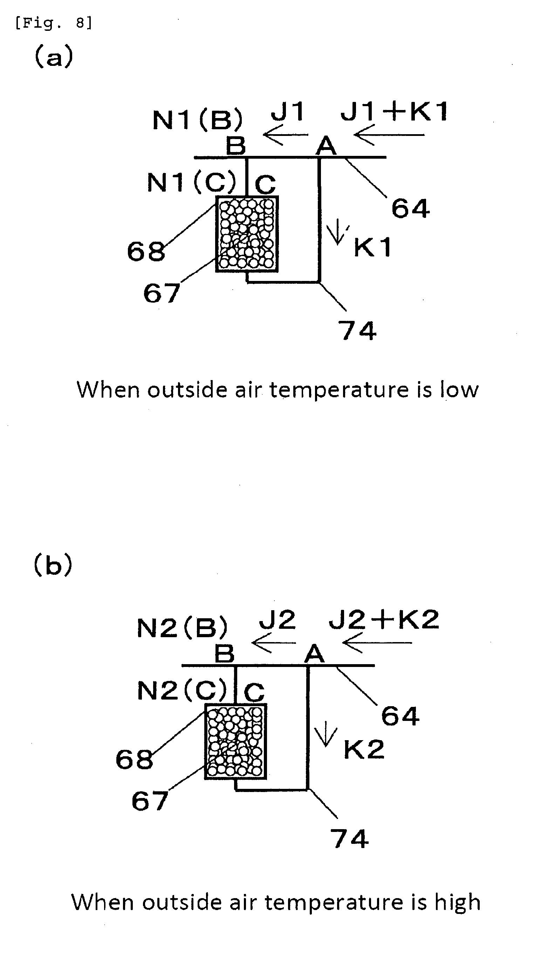

Figs. 8 are explanatory diagrams for explaining a flow rate of water flowing through the bypass circuit and the entering-water pipe passage and a concentration of the scale suppressing agent 67. Fig. 8(a) shows a case where an outside air temperature is low, and Fig. 8(b) shows a case where the outside air temperature is high.

The bypass circuit 74 is connected to the connection A and the connection B existing in the entering-water pipe passage 64 (connection A is located upstream of the connection B). The bypass circuit 74 includes the scale suppressing means 68 in which the scale suppressing agent 67 is accommodated.

A flow rate of water which splits at the connection A and flows into the entering-water pipe passage 64, and a flow rate of water which flows into the bypass circuit are defined as $J1$ and $K1$ in Fig. 8(a) and defined as $J2$ and $K2$ in Fig. 8(b). A concentration of the scale suppressing agent 67 with respect to water which flows out from an outlet C of the scale suppressing means 68 is defined as $N1(C)$ in Fig. 8(a) and defined as $N2(C)$ in Fig. 8(b).

In the case of Fig. 8(a), since the outside air temperature is lower than that of Fig. 8(b), a heating flow rate becomes smaller. Thus, speed of flow in the scale suppressing means 68 becomes slower. Therefore, time during which the scale suppressing agent 67 and water which flows into the scale suppressing means 68 are in contact with each other becomes long. As a result, a concentration after the water comes out from the scale suppressing means 68 in Fig. 8(a) becomes greater. That is, this situation is expressed as the following equation 1.

$$N1(C) > N2(C) \ldots \text{(equation 1)}$$

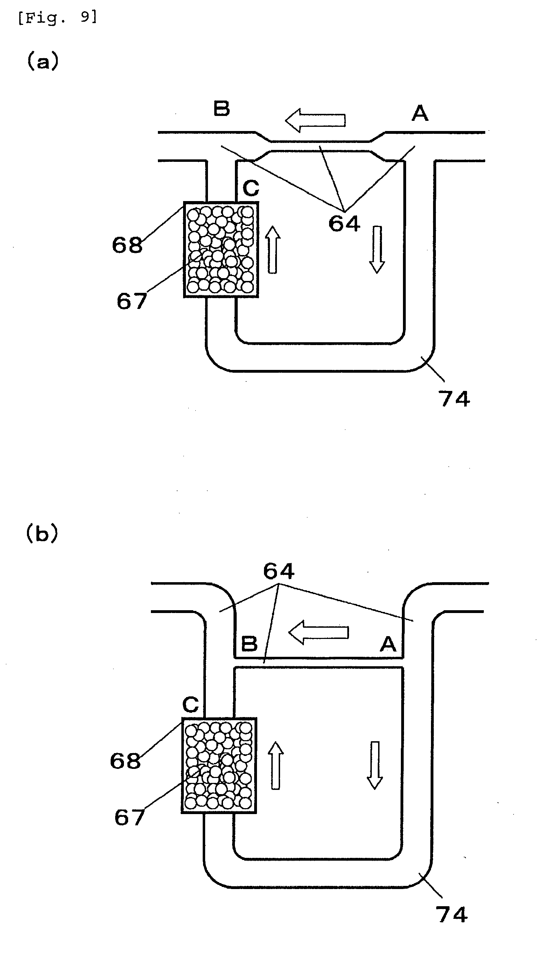

If the concentration of the scale suppressing agent 67 downstream of the connection B is defined as $N1(B)$ in Fig. 9(a) and defined as $N2(B)$ in Fig. 9(b), the following equations 2 and 3 are obtained.

$$N1(B) = N1(C) \times K1/(J1+K1) \ldots \text{(equation 2)}$$

$$N2(B) = N2(C) \times K2/(J2+K2) \ldots \text{(equation 3)}$$

A relation between the entering-water pipe passage 64 and a split flow rate of a flow rate of water flowing through the bypass circuit 74 is expressed as the following equation 4.

$$J1/K1=J2/K2 ... \text{(equation 4)}$$

In this case, a relation between a concentration of the scale suppressing agent 67 downstream of the connection B and a concentration of the scale suppressing agent 67 after water comes out from the outlet C of the scale suppressing means 68 is expressed as the following equation 5.

$$N1(B):N2(B)=N1(C):N2(C) ... \text{(equation 5)}$$

From the above equations 1 and 5, a relation of concentrations of the scale suppressing agent 67 downstream of the connection B flowing into the hot water-supply heat exchanger 52 is expressed as the following equation 6.

$$N1(B)>N2(B) ... \text{(equation 6)}$$

As can be found from the equation 6, if an outside air temperature is lower, a concentration of the scale suppressing agent 67 flowing into the hot water-supply heat exchanger 52 becomes greater. If the outside air temperature is lower, the heating temperature is higher and scale is prone to generate, but the concentration of the scale suppressing agent 67 can be increased, and it is possible to prevent scale from adhering to the hot water-supply heat exchanger 52 or to reduce adhesion of scale tot he hot water-supply heat exchanger 52.

Hence, as shown in Figs. 7 and 8, if water flowing into the heating means 55 is made to split by the bypass circuit 74 which can set the split flow rate, it is possible to appropriately adjust a flow rate of water which flows into the scale suppressing means 68. According to this, it is possible to adjust an amount of the scale suppressing agent 67 which dissolves in water.

Figs. 9 are explanatory diagrams for explaining a method to set a split flow rate of a flow rate of water flowing through the bypass circuit 74 and the entering-water pipe passage 64.

As shown in Fig. 9(a), a flow path resistance of the entering-water pipe passage 64 between the connection A and the connection B is changed by differentiating a cross-sectional area of the entering-water pipe passage 64 and a cross-sectional area of the bypass circuit 74 from each other. According to this, if a pressure loss between the connections A and B is set, it is possible to determine the split flow ratio of the branch flow rate in accordance with the pressure difference.

If the flow path resistance of the scale suppressing means 68 is large, dynamic pressure of fluid is applied toward the bypass circuit 74 having the scale suppressing means 68, and a shape of the entering-water pipe passage 64 between the connections A and B is changed as shown in Fig. 9(b). According to this, it is possible to set the pressure loss between the connections A and B and to determine the split flow ratio of the branch flow rate in accordance with the pressure difference if need arises.

As described above, a portion of water from the lower portion of the hot water tank 57 is made to branch, the scale suppressing agent 67 is made to dissolve in the branched portion of water, and other water flows into the hot water-supply heat exchanger 52 as it is and thus, it is possible to prevent the scale suppressing agent 67 from being wasted. There is an effect that lifetime of the scale suppressing agent is increased, and it is possible to reduce maintenance costs required for maintenance such as exchange and replenishment of the scale suppressing agent 67.

(Third Embodiment)

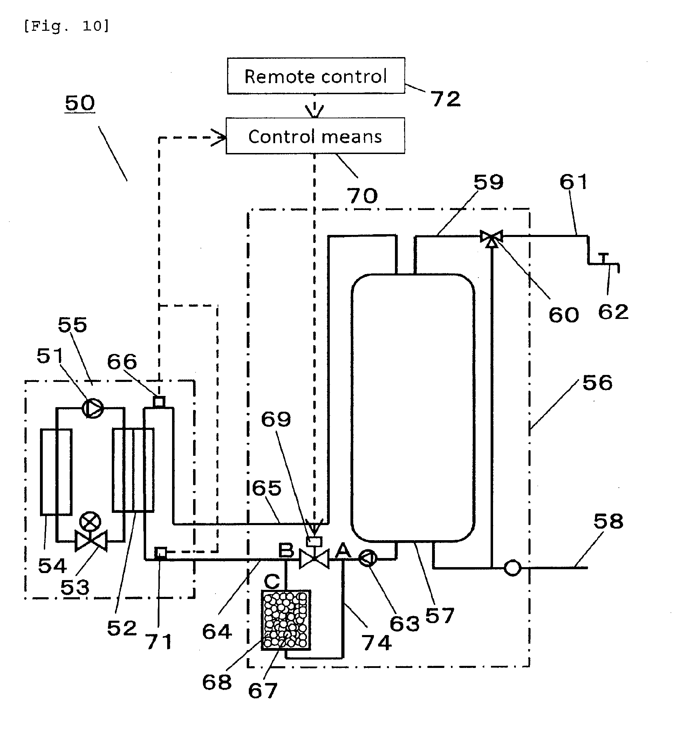

Fig. 10 is a block diagram of a water heater in a third embodiment of the invention.

In the third embodiment, the same symbols are allocated to the same elements as those in the other embodiments, and detailed description thereof will be omitted.

As shown in Fig. 10, the water heater 50 in the fourth embodiment includes flow rate-adjusting means 69 and control means 70 which controls an operation of the flow rate-adjusting means 69. The flow rate-adjusting means 69 and the control means 70 are located between the connection A and the connection B of the entering-water pipe passage 64.

As the flow rate-adjusting means 69, it is possible to use a flow rate control valve which is generally used in a water heater for example. By driving a stepping motor, a cross-sectional area of a flow path through which fluid passes is changed and a flow rate can be adjusted.

An operation and an effect of the water heater 50 configured as described above will be described below.

In Fig. 10, when a concentration of the scale suppressing agent 67 downstream of the connection B is changed to a predetermined concentration, a ratio of a flow rate (branch flow rate) of water which branches toward the scale suppressing means 68 and flows is changed by changing a flow path resistance of the flow rate-adjusting means 69 (changing cross-sectional area of flow path for example) and changing a pressure loss between the connection A and the connection B.

That is, if a flow path resistance of the flow rate-adjusting means 69 is increased (cross-sectional area of a flow path is reduced by reducing valve opening degree), the pressure loss between the connection A and the connection B is increased and thus, the ratio of the branch flow rate is increased. On the other hand, if the flow path resistance of the flow rate-adjusting means 69 is reduced (cross-sectional area of flow path is increased for example), it is possible to reduce the ratio of the branch flow rate. According to this, it is possible to adjust the flow rate.

A factor that scale adheres in the hot water-supply heat exchanger 52 and grows is a hot water storing temperature (heating temperature) stored in the hot water tank 57. If the heating temperature is higher, a generation degree and a growing degree of scale are greater. There is a relation between the heating temperature and the outside air temperature as shown in Fig. 4. That is, as the outside air temperature is lower, the heating temperature becomes higher, the scale is more prone to generate and the scale grows faster.

The outside air temperature influences a temperature of water supplied to the lower portion of the hot water tank 57 through the water supply pipe 58. The supplied water temperature influences an entering-water temperature of water which flows from the lower portion of the hot water tank 57 into the heating means 55 through the entering-water pipe passage 64 and the scale suppressing means 68.

Hence, it is only necessary that the entering-water temperature of water flowing into the heating means is detected by the entering-water temperature detecting means 71, the outside air temperature is estimated, and a ratio of the branch flow rate is set based on the supplied water temperature such that a concentration of the scale suppressing agent 67 which dissolves in water flowing into the heating means 55 becomes equal to a concentration which suppresses generation and growth of scale with respect to the entering-water temperature. At this time, a relation between a supplied water temperature and a concentration of the scale suppressing agent 67 with respect to water capable of suppressing the generation and the growth of the scale is previously obtained, and this relation may be memorized in the remote control 72.

The flow rate-adjusting means 69 adjusts the ratio of the branch flow rate, but a necessary flow rate can be obtained by adjusting the number of rotations of the circulation pump 63.

By operating the flow rate-adjusting means 69 in accordance with the entering-water temperature, it is possible to set a concentration of the scale suppressing agent 67 capable of suppressing generation of scale. Therefore, in accordance with operating conditions of the water heater, it is possible to appropriately adjust the concentration of the scale suppressing agent 67 with respect to water which flows into the heating means 55. Hence, it is possible to provide a reliable water heater which prevents deposition and adhesion of scale for long periods. Further, there is an effect that lifetime of the scale suppressing agent 67 is increased, and it is possible to reduce maintenance costs required for maintenance such as exchange and replenishment of the scale suppressing agent 67.

A temperature (heating temperature) of hot water stored in the hot water tank 57 is generally about 65 to 90°C. Here, when an outside air temperature is low and a hot water supply load is large, since the hot water storing temperature (heating temperature) is high, a generation degree and a growing degree of scale are high, but if the hot water storing temperature (heating temperature) is about 65°C to 70°C, generation of scale is small and scale does not grow almost at all.

Hence, when the heating flow rate corresponds to such a heating temperature condition, the control means 70 should adjust the flow rate-adjusting means 69 such that a concentration of the scale suppressing agent 67 becomes the smallest. That is, the control means 70 controls such that a flow path resistance of the flow rate-adjusting means 69 becomes the smallest (cross-sectional area of flow path through which fluid of flow rate-adjusting means 69 passes becomes the largest).

When the entering-water temperature is such a value that generation of scale is small and scale does not grow almost at all, since the concentration of the scale suppressing agent 67 can be set to the smallest value, lifetime of the scale suppressing agent 67 becomes long as compared with a case where the scale suppressing agent 67 is used while setting its concentration to a safty high level. Hence, there is an effect that it is possible to reduce maintenance costs required for maintenance such as exchange and replenishment of the scale suppressing agent 67.

(Fourth Embodiment)

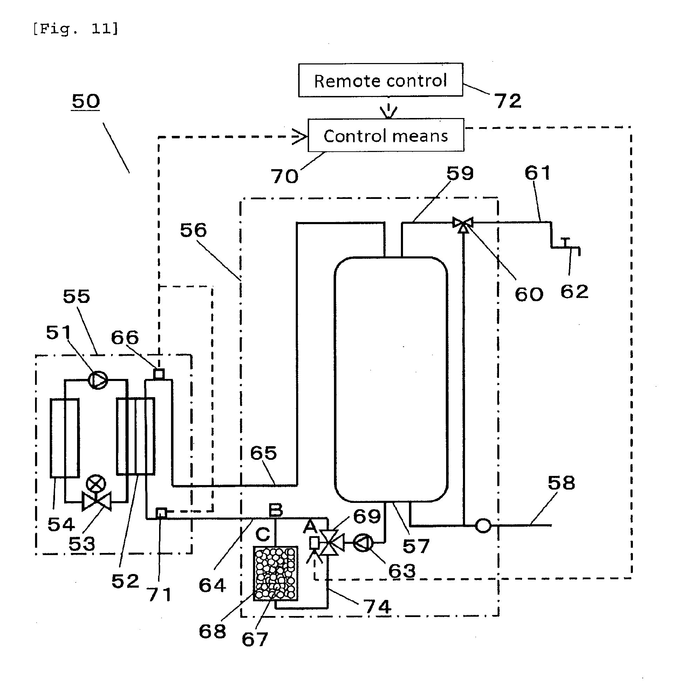

Fig. 11 is a block diagram of a water heater in a fourth embodiment of the invention. In the fourth embodiment, the same symbols are allocated to the same elements as those in the other embodiments, and detailed description thereof will be omitted.

As shown in Fig. 11, a connection A is provided with a flow rate-adjusting means 69 (three-way valve) which can adjust flow rates flowing through two outlet-side flow paths by changing cross-sectional areas of the two outlet-side flow paths. That is, a flowing-inlet of the flow rate-adjusting means 69 is connected to the entering-water pipe passage 64 of the hot water tank 57, one of two flowing-outlets of the flow rate-adjusting means 69 is connected to the entering-water pipe passage 64 of the heating means 55 and the other of the two flowing-outlets is connected to the bypass circuit 74. The control means 70 controls an operation of the flow rate-adjusting means 69 such that outlet side flow rates become equal to necessary split flow ratios.

As the flow rate-adjusting means 69, it is possible to use a mixing valve which is generally used in a water heater for example. A cross-sectional area of an outlet side flow path through which fluid passes is changed by driving a stepping motor, thereby changing a flow rate.

An operation and an effect of the water heater 50 configured as described above will be described below. In the water heater 50 shown in Fig. 11, when a concentration of the scale suppressing agent 67 of water downstream of the connection B is changed to a predetermined configuration, a flow path resistance of the flow rate-adjusting means 69 is changed (e.g., cross-sectional area of flow path is changed). According to this, it is possible to change a ratio between a flow rate (branch flow rate) of water which branches toward the bypass circuit 74 (scale suppressing means 68) and flows and a flow rate (branch flow rate) of water flowing through the entering-water pipe passage 64. That is, the flow rate-adjusting means 69 appropriately adjusts both a flow rate of water flowing through the entering-water pipe passage 64 and a flow rate of water flowing through the bypass circuit 74.

A factor that scale adheres in the hot water-supply heat exchanger 52 and grows is a hot water storing temperature (heating temperature) stored in the hot water tank 57. If the heating temperature is higher, a generation degree and a growing degree of scale are greater. There is a relation between the heating temperature and the outside air temperature shown in Fig. 4. That is, if the outside air temperature is lower, the heating temperature becomes higher, scale is more prone to generate, and the growth of scale is faster.

The outside air temperature influences a temperature of water supplied to the lower portion of the hot water tank 57 through the water supply pipe 58. The supplied water temperature influences an entering-water temperature of water which flows from the lower portion of the hot water tank 57 into the heating means 55 through the entering-water pipe passage 64 and the scale suppressing means 68.

Hence, it is only necessary that the entering-water temperature of water flowing into the heating means is detected by the entering-water temperature detecting means 71, the outside air temperature is estimated, and a ratio of the branch flow rate is set based on the entering-water temperature such that a concentration of the scale suppressing agent 67 which dissolves in water flowing into the heating means 55 becomes equal to a concentration which suppresses generation and growth of scale with respect to the supplied water temperature. At this time, a relation between an entering-water temperature and a concentration of the scale suppressing agent 67 with respect to water capable of suppressing the generation and the growth of the scale may previously be obtained, and this relation may be memorized in the remote control 72.

The flow rate-adjusting means 69 adjusts the ratio of the branch flow rate, but a necessary flow rate can be obtained by adjusting the number of rotations of the circulation pump 63.

In accordance with the entering-water temperature, it is possible to set a concentration of the scale suppressing agent 67 at which scale is not generated. Therefore, it is possible to appropriately adjust a concentration of the scale suppressing agent 67 with respect to water which flows into the heating means 55 in accordance with operating conditions of the water heater 50. Hence, it is possible to provide a reliable water heater which prevents deposition and adhesion of scale for long periods. Further, there is an effect that lifetime of the scale suppressing agent 67 is increased, and it is possible to reduce maintenance costs required for maintenance such as exchange and replenishment of the scale suppressing agent 67.

[INDUSTRIAL APPLICABILITY]

As described above, according to the water heater of the present invention, it is possible to appropriately adjust an amount of scale suppressing agent which dissolves in water in accordance with operating conditions, to enhance reliability of the water heater, and to increase the lifetime of the scale suppressing means. Therefore, the invention can be applied to a domestic water heater and a professional-use water heater.

**Claims**

1. A water heater comprising:

   a hot water tank (57) in which hot water is stored;
   a water supply pipe (58) supplying water to a lower portion of the hot water tank (57);
   heating means (55) for heating water sent from the lower portion of the hot water tank (57) through an entering-water pipe passage (64),
a circulation pump (63) which is disposed in the entering-water pipe passage (64) and which sends the water of the lower portion of the hot water tank (57) to the heating means (55);
an outgoing-hot water pipe passage (65) for guiding water heated by the heating means (55) to an upper portion of the hot water tank (57);
scale suppressing means (68) disposed in the entering-water pipe passage (64) and adding, to water sent to the heating means (55), scale suppressing agent (67) which suppresses generation of scale and; control means (70) for controlling the concentration of the scale suppressing agent (67) so that
when a temperature of water which flows into the heating means decreases, a configuration of the scale suppressing agent (67) included in the water which flows into the heating means (55) is increased.

2. A water heater comprising:

a hot water tank (57) in which hot water is stored;
a water supply pipe (58) for supplying water to a lower portion of the hot water tank (57);
heating means (55) for heating water sent from the lower portion of the hot water tank (57) through an entering-water pipe passage (64);
a circulation pump (63) which is disposed in the entering-water pipe passage (64)and which sends the water of the lower portion of the hot water tank (57) to the heating means (55);
an outgoing-hot water pipe passage (65) for guiding water heated by the heating means (55) to an upper portion of the hot water tank (57); and
scale suppressing means (68) disposed in the entering-water pipe passage (64) and adding, to water sent to the heating means (55), scale suppressing agent (67) which suppresses generation of scale and, control means (70) for controlling the concentration of the scale suppressing agent (67) so that
when an outside air temperature decreases, a concentration of the scale suppressing agent (67) included in water which flows into the heating means (55) is increased.

3. The water heater according to claim 1 or 2, wherein when a temperature of the water which flows into the heating means (55) is lower, a flow rate of the water which flows into the heating means (55) is made smaller.

4. The water heater according to claim 1 or 2, wherein the entering-water pipe passage (64) is provided with a bypass circuit (74) which bypasses a portion of the entering-water pipe passage (64), the scale suppressing means (68) includes flow rate-adjusting means (69) which is disposed in the bypass circuit (74) and which adjusts a ratio between a flow rate of water flowing through the entering-water pipe passage (64) and a flow rate of water flowing through the bypass circuit (74), and the scale suppressing means (68) also includes entering-water temperature detecting means (66) which measures a temperature of the water which flows into the heating means (55), and the ratio of the flow rates is adjusted based on a detected value of the entering-water temperature detecting means (66).

5. The water heater according to any one of claims 1 to 4, wherein the scale suppressing agent (67) has polyphosphate as a main component.

**Patentansprüche**

1. Wasserheizgerät, enthaltend:

einen Heißwasserbehälter (57), in welchem Heißwasser gespeichert ist;
ein Wasserzuführrohr (58) zum Zuführen von Wasser zu einem unteren Abschnitt des Heißwasserbehälters (57);
Heizmittel (55) zum Erhitzen des Wassers, das von dem unteren Abschnitt des Heißwasserbehälters (57) durch eine Wassereintrittsleitung (64) gefördert wird;
eine Zirkulationspumpe (63), welche in der Wassereintrittsleitung (64) angeordnet ist und welche das Wasser des unteren Abschnittes des Heißwasserbehälters (57) zu den Heizmitteln (55) fördert;
eine Heißwasseraustrittsleitung (65) zum Fördern des durch die Heizmittel (55) erhitzten Wassers zu einem oberen Abschnitt des Heißwasserbehälters (57);
Mittel (68) zum Verhindern von Kalk, welches in der Wassereintrittsleitung (64) angeordnet ist und welches dem zu den Heizmitteln (55) geförderten Wasser eine Substanz (67) zum Verhindern von Kalk zuführt, die ein Entstehen von Kalk unterdrückt; und
Steuermittel (70) zum Steuern der Konzentration der Substanz (67) zum Verhindern von Kalk, sodass, wenn sich eine Temperatur des in die Heizmittel fließenden Wassers verringert, die Konzentration der in dem in die Heizmittel (55) fließenden Wasser enthaltenen Substanz (67) zum Verhindern von Kalk vergrößert wird.

**2.** Wasserheizgerät, enthaltend:

einen Heißwasserbehälter (57), in welchem Heißwasser gespeichert ist;

ein Wasserzuführrohr (58) zum Zuführen von Wasser zu einem unteren Abschnitt des Heißwasserbehälters (57);

Heizmittel (55) zum Erhitzen des Wassers, das von dem unteren Abschnitt des Heißwasserbehälters (57) durch eine Wassereintrittsleitung (64) gefördert wird;

eine Zirkulationspumpe (63), welche in der Wassereintrittsleitung (64) angeordnet ist und welche das Wasser des unteren Abschnittes des Heißwasserbehälters (57) zu den Heizmitteln (55) fördert;

eine Heißwasseraustrittsleitung (65) zum Fördern des durch die Heizmittel (55) erhitzten Wassers zu einem oberen Abschnitt des Heißwasserbehälters (57);

Mittel (68) zum Verhindern von Kalk, welches in der Wassereintrittsleitung (64) angeordnet ist und welches den zu dem Heizmitteln (55) geförderten Wasser eine Substanz (67) zum Verhindern von Kalk zuführt, die ein Entstehen von Kalk unterdrückt; und

Steuermittel (70) zum Steuern der Konzentration der Substanz (67) zum Verhindern von Kalk, sodass, wenn sich die Temperatur der Außenluft verringert, die Konzentration der in dem durch die Heizmittel (55) fließenden Wasser enthaltenen Substanz (67) zum Verhindern von Kalk vergrößert wird.

**3.** Wasserheizgerät nach Anspruch 1 oder 2, wobei, wenn eine Temperatur des in die Heizmittel (55) fließenden Wassers niedriger ist, eine Durchflussrate des in die Heizmittel (55) fließenden Wassers verringert wird.

**4.** Wasserheizgerät nach Anspruch 1 oder 2, wobei die Wassereintrittsleitung (64) mit einem Bypasskreislauf (74) versehen ist, der einen Teil der Wassereintrittsleitung (64) überbrückt; wobei das Mittel (68) zum Verhindern von Kalk Mittel (69) zum Einstellen einer Durchflussrate enthält, welches in dem Bypasskreislauf (74) angeordnet ist und welches ein Verhältnis zwischen einer Durchflussrate des durch die Wassereintrittsleitung (64) fließenden Wassers und einer Durchflussrate des durch den Bypasskreislauf (74) fließenden Wassers einstellt; und das Mittel (68) zum Verhindern von Kalk ebenfalls Mittel (66) zum Erfassen der Wassereintrittstemperatur enthält, das die Temperatur des in die Heizmittel (55) fließenden Wassers erfasst; und das Verhältnis der Durchflussraten anhand eines erfassten Wertes des Mittels (66) zum Erfassen der Wassereintrittstemperatur eingestellt wird.

**5.** Wasserheizgerät nach einem der Ansprüche 1 bis 4, wobei die Substanz (67) zum Verhindern von Kalk Polyphosphat als ein Hauptbestandteil aufweist.

**Revendications**

**1.** Chauffe-eau comprenant :

un réservoir d'eau chaude (57) dans lequel de l'eau chaude est stockée ;

un tuyau d'alimentation en eau (58) pour alimenter de l'eau à une partie inférieure du réservoir d'eau chaude (57) ;

un moyen de chauffage (55) pour chauffer l'eau envoyée à partir de la partie inférieure du réservoir d'eau chaude (57) à travers un passage de tuyau d'eau d'entrée (64) ;

une pompe de circulation (63) qui est disposée dans le passage de tuyau d'eau d'entrée (64) et qui envoie l'eau de la partie inférieure du réservoir d'eau chaude (57) vers le moyen de chauffage (55) ;

un passage de tuyau d'eau chaude de sortie (65) pour guider l'eau chauffée par le moyen de chauffage (55) vers une partie supérieure du réservoir d'eau chaude (57) ;

un moyen de suppression de tartre (68) disposé dans le passage de tuyau d'eau d'entrée (64) et ajoutant, à l'eau envoyée au moyen de chauffage (55), un agent de suppression de tartre (67) qui supprime la génération de tartre ; et

un moyen de commande (70) pour commander la concentration de l'agent de suppression de tartre (67) de sorte que, lorsqu'une température de l'eau qui circule dans le moyen de chauffage diminue, une configuration de l'agent de suppression de tartre (67) inclus dans l'eau qui circule dans le moyen de chauffage (55) soit diminuée.

**2.** Chauffe-eau comprenant :

un réservoir d'eau chaude (57) dans lequel de l'eau chaude est stockée ;

un tuyau d'alimentation en eau (58) pour alimenter de l'eau à une partie inférieure du réservoir d'eau chaude (57) ;

un moyen de chauffage (55) pour chauffer l'eau envoyée à partir de la partie inférieure du réservoir d'eau chaude (57) à travers un passage de tuyau d'eau d'entrée (64) ;

une pompe de circulation (63) qui est disposée dans le passage de tuyau d'eau d'entrée (64) et qui envoie l'eau de la partie inférieure du réservoir d'eau chaude (57) vers le moyen de chauffage (55) ;

un passage de tuyau d'eau chaude de sortie (65) pour guider l'eau chauffée par le moyen de chauffage (55) vers une partie supérieure du réservoir d'eau chaude (57) ; et

un moyen de suppression de tartre (68) disposé dans le passage de tuyau d'eau d'entrée (64) et ajoutant, à l'eau envoyée au moyen de chauffage (55), un agent de suppression de tartre (67) qui supprime la génération de tartre ; et

un moyen de commande (70) pour commander la concentration de l'agent de suppression de tartre (67) de sorte que, lorsqu'une température d'air extérieur diminue, une concentration de l'agent de suppression de tartre (67) inclus dans l'eau qui circule dans le moyen de chauffage (55) soit diminuée.

3. Chauffe-eau selon la revendication 1 ou 2, dans lequel, lorsqu'une température de l'eau qui circule dans le moyen de chauffage (55) est inférieure, un débit de l'eau qui circule dans le moyen de chauffage (55) est rendu plus petit.

4. Chauffe-eau selon la revendication 1 ou 2, dans lequel le passage de tuyau d'eau d'entrée (64) est pourvu d'un circuit de contournement (74) qui contourne une partie du passage de tuyau d'eau d'entrée (64), le moyen de suppression de tartre (68) comporte un moyen d'ajustement de débit (69) qui est disposé dans le circuit de contournement (74) et qui ajuste un rapport entre un débit de l'eau circulant à travers le passage de tuyau d'eau d'entrée (64) et un débit de l'eau circulant à travers le circuit de contournement (74), et le moyen de suppression de tartre (68) comporte également un moyen de détection de température d'eau d'entrée (66) qui mesure une température de l'eau qui circule dans le moyen de chauffage (55), et le rapport des débits est ajusté sur la base d'une valeur détectée du moyen de détection de température d'eau d'entrée (66).

5. Chauffe-eau selon l'une quelconque des revendications 1 à 4, dans lequel l'agent de suppression de tartre (67) comporte du polyphosphate en tant que composant principal.

[Fig. 1]

[Fig. 2]

[Fig. 3]

[Fig. 4]

[Fig. 5]

[Fig. 6]

[Fig. 7]

[Fig. 8]

(a)

N1(B) J1 J1+K1

B ← A ←

N1(C) C

64

68

67

K1

74

When outside air temperature is low

(b)

N2(B) J2 J2+K2

B ← A ←

N2(C) C

64

68

67

K2

74

When outside air temperature is high

[Fig. 9]

(a)

(b)

[Fig. 10]

[Fig. 11]

[Fig. 12]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011069572 A